# EUROPEAN PATENT APPLICATION

(11) **EP 1 069 058 A2**
(43) Date of publication of application: **17.01.2001**
(21) Application number: 00610068.9
(22) Date of filing: 03.07.2000
(51) Int. Cl.: B65G 19/02

(54) **A conveyor for conveying bales of straw**

(30) Priority: 02.07.1999 DK 95799
(71) Applicant: FLS MILJO A/S, 2500 Valby (DK)
(72) Inventor: Svendsen, Jens Jorgen, DK-3450 Allerod (DK)
(74) Representative: Carlsson, Eva

(57) **Abstract**

To protect the rotating shafts (4,4a) of the conveyor, it comprises a guard device arranged below the table surface (15) in connection with each shaft. The guard device forms a barrier between the table surface of the conveyor and at least the part of the said shafts which is located below the slot or slots (13,14) in the table surface. The guard device comprises a plurality of bushing members (17,18), each having a tubular section arranged coaxially with and surrounding a corresponding section of each shaft.

## Description

The present invention relates to a conveyor for conveying bales of straw, comprising a drive arrangement with a rotatably journalled drive shaft driven by a drive engine, a take-up arrangement with a take-up shaft, at least one conveyor means, particularly a chain extending in a conveying direction for the conveyor between the drive shaft and the take-up shaft, and a table surface arranged above the drive shaft and the take-up shaft with at least one slot extending in the conveying direction.

Such conveyors are used in straw firing plants, among others, where the straw bales are passed from a storage place to the firing chamber in the straw firing boiler of the plant. When delivered and stored, the straw bales are normally packed by means of strings, which are cut at some point along the transport path, whereupon the straw bales can be broken open in a known manner and be passed in through the firing opening of the boiler.

During conveying it is not unusual for parts of these cut-off strings to fall down through the slot or slots in the table surface and coil themselves around the rotating shafts. As a result of accumulation of string material around these shafts, the operation of the conveyor may have to be stopped, and the entire plant may even have to be temporarily closed down to clean the shafts for bits of string.

Against this background it is the object of the invention to improve a conveyor of the type mentioned in the introduction so that these disadvantages are alleviated.

This object is achieved by means of a conveyor which is characterized in that it comprises a guard device arranged below the table surface in association with each shaft, and that the guard device forms a barrier between the table surface and at least the part of the said shafts which is located below the slot or slots in the table surface.

Arranging a guard in association with the rotating shafts ensures that string parts cannot coil themselves around these shafts, while the conveying of the straw bales on the conveyor is not prevented.

In a preferred embodiment the guard device comprises a plurality of bushing members, each having a tubular section arranged coaxially with and surrounding a corresponding section of each shaft.

In a structurally simple embodiment, the conveyor further comprises a side guard arranged below the table surface and extending at substantially right angles thereto and to each shaft, and each bushing member is connected with the side guard, thus further improving security against string parts and the like coiling themselves around the shafts.

The invention will now be described in more detail below with reference to the enclosed drawing, in which
Fig. 1 shows a side view of a conveyor according to the invention,
Fig. 2 is a top plan view of the conveyor,
Fig. 3 is a sectional view along the line III-III in Fig. 2 on a larger scale,
Fig. 4 is a segment of Fig. 3 on an even larger scale,
Fig. 5 is a front view of a detail of the conveyor according to the invention on the same scale as in Fig. 4, and
Fig. 6 is a side view of the detail shown in Fig. 5.

At one end, the conveyor generally designated 1 in the drawing comprises a drive arrangement 2 with a drive engine 3 connected with a drive shaft 4 rotatably journalled in bearings 5, 6. Two chain wheels 7, 8 are mounted on the drive shaft 4, and each has a conveying means in the form of a chain 9, 10 looped around it for defining a conveying direction for the conveyor 1. At the end of the conveyor 1 opposite to the drive arrangement 2, a take-up arrangement is located comprising a take-up shaft 4a rotatably journalled in bearings 5a, 6a. The take-up shaft 4a also has two chain wheels mounted, not shown, around which the chains 9, 10 are looped.

The chains 9, 10 and a plurality of dogs 11, 12 in connection with each chain project upwards through two slots 13, 14 extending in the conveying direction in a table surface 15, which constitutes the upper surface of the conveyor and thus the contact surface for the straw bales to be conveyed by the conveyor.

The conveyor shown in the drawing is connected with further conveyors that may be designed similarly or otherwise to form a transport path in a straw firing plant. Fuel in the form of straw bales are conveyed along this transport path from, for example, a straw barn to the firing opening of the boiler. At some point along the transport path a string cutter is arranged for cutting the strings keeping the straw bales together. During the transport on the conveyor 1, parts of these strings can fall through the slots 13, 14 in the table surface 15.

As it appears most clearly from Figs. 3 and 4, for protection of the rotating shafts 4 and 4a, the conveyor 1 comprises a guard device arranged below the table surface 15 in association with each shaft and forming a barrier between the table surface 15 and at least the part of the shafts located below the slots 13, 14 in the table surface 15. In these figures, the location and design of the guard device are shown in connection with the drive shaft 4. It is understood that a corresponding arrangement is located at the take-up shaft 4a.

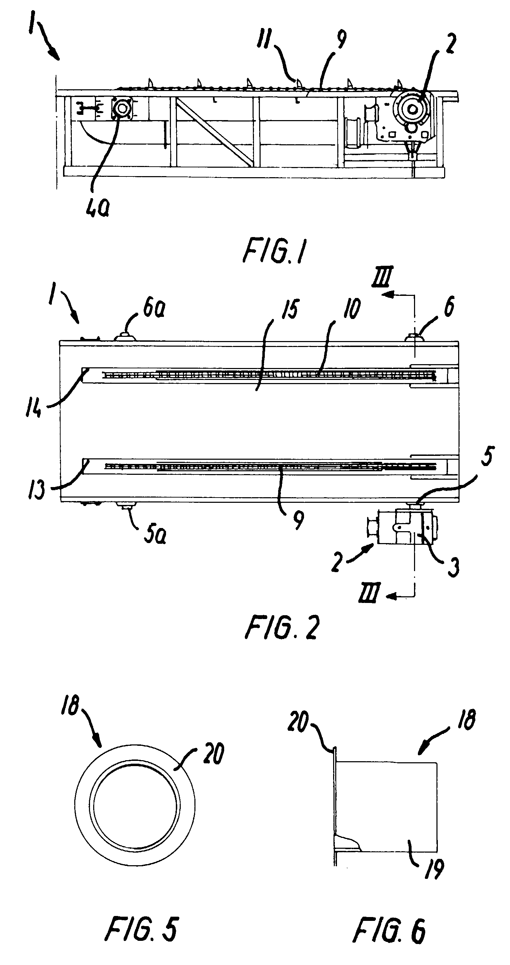

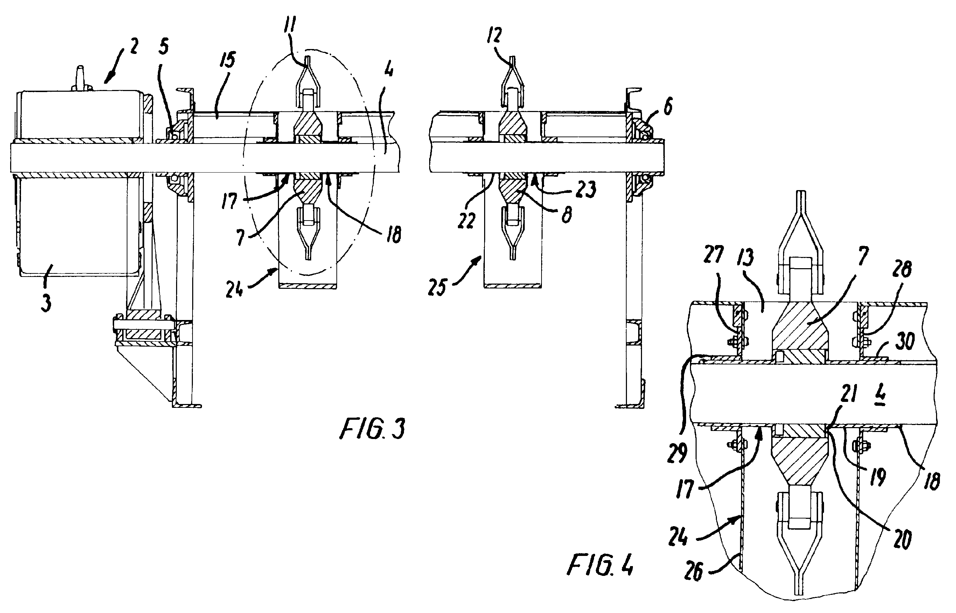

Thus, at the drive arrangement 2 in connection with the left chain wheel 7 in Fig. 3, the guard device comprises two bushing members 17, 18, the structure of one bushing member 18 being shown most clearly in Figs. 5 and 6. The bushing members 17, 18 are arranged on respective sides of the chain wheel 7, and each has a tubular section 19 arranged coaxially with and surrounding a corresponding section of the drive shaft 4. To obtain high security against penetration of, for example, string parts at the connection of the drive shaft 4 with the chain wheel 7, a flange part 20 at right angles to the tubular section 19 is received in a recess 21 in the chain wheel 7. Corresponding bushing members 22, 23 are arranged at the other chain wheel 8.

The conveyor further comprises a side guard 24, 25 arranged below the table surface 15. The side guard 24 at the left chain wheel 7 comprises two substantially plate-shaped sections 27, 28 extending substantially at right angles to the table surface 15 and the drive shaft 4. Each plate-shaped section 27, 28 comprises a collar portion 29, 30 extending coaxially with the drive shaft 4, and at the lower side of the shaft 4, the plate-shaped sections 27, 28 are connected with a cross-sectionally U-shaped section 26. The bushing members 17, 18 are connected with the side guard 24 by the tubular sections 19 being connected with the collar portions 29, 30 on the side guard 24.

In the area located closest below the table surface 15, the bushing members 17, 18 together with the side guard 24 thus form a kind of channel on either side of the chain wheel 7, in which string parts and other elements that may fall out of the straw bales can be collected without coming into contact with the drive shaft 4, which rotates during operation.

The side guard 25 and corresponding side guards at the take-up shaft 4a may be similarly designed.

## Claims

1. A conveyor for conveying bales of straw, comprising
a drive arrangement with a rotatably journalled drive shaft driven by a drive engine,
a take-up arrangement with a take-up shaft,
at least one conveyor means, particularly a chain extending in a conveying direction for the conveyor between the drive shaft and the take-up shaft, and
a table surface arranged above the drive shaft and the take-up shaft with at least one slot extending in the conveying direction,
**characterized** in that the conveyor comprises a guard device arranged below the table surface in association with each shaft, and that the guard device forms a barrier between the table surface and at least the part of the said shafts which is located below the slot or slots in the table surface.

2. A conveyor according to claim 1, **characterized** in that the guard device comprises a plurality of bushing members, each having a tubular section arranged coaxially with and surrounding a corresponding section of each shaft.

3. A conveyor according to claim 2, **characterized** in that the conveyor further comprises a side guard arranged below the table surface and extending at substantially right angles thereto and to each shaft, and that each bushing member is connected with the said side guard.
